# EUROPÄISCHE PATENTSCHRIFT

(11) **EP 1 856 312 B1**
(45) Veröffentlichungstag und Bekanntmachung des Hinweises auf die Patenterteilung: **10.04.2013**
(21) Anmeldenummer: 06722505.2
(22) Anmeldetag: 18.02.2006
(51) Int. Cl.: D01D 5/00

(54) **VERFAHREN ZUR HERSTELLUNG VON NANO- UND MESOFASERN DURCH EIEKTROSPINNING VON KOLLOIDALEN DISPERSIONEN**
METHOD FOR PRODUCING NANOFIBRES AND MESOFIBRES BY THE ELECTROSPINNING OF COLLOIDAL DISPERSIONS
PROCEDE DE FABRICATION DE NANOFIBRES ET MESOFIBRES PAR ELECTROFILAGE DE DISPERSIONS COLLOIDALES

(30) Priorität: 24.02.2005 DE 102005008926
(43) Veröffentlichungstag der Anmeldung: 21.11.2007
(73) Patentinhaber: BASF SE, 67056 Ludwigshafen (DE)
(72) Erfinder: GREINER, Andreas, 35287 Amöneburg (DE); WENDORFF, Joachim, 35043 Marburg (DE); ISHAQUE, Michael, 68165 Mannheim (DE)
(86) Internationale Anmeldenummer: PCT/DE2006/000296
(87) Internationale Veröffentlichungsnummer: WO 2006/089522

(56) Entgegenhaltungen:
- WO-A-2005/096744
- DAN LI AND YOUNAN XIA: "Electrospinning of Nanofibers: Reinventing the Wheel?" ADVANCED MATERIALS, Bd. 16, Nr. 14, 19. Juli 2004 (2004-07-19), Seiten 1151-1170, XP002385745 Weinheim, DE
- NORRIS I D ET AL.: "Electrostatic fabrication of ultrafine conducting fibers: polyaniline/polyethylene oxide blends" SYNTHETIC METALS, Bd. 114, Nr. 2, 1. August 2000 (2000-08-01), Seiten 109-114, XP002385853 Lausanne, CH
- DATABASE WPI Week 200058, Derwent Publications Ltd., London, GB; AN 2000-604486, XP002474956 & JP 2000 204199 A (SANYO CHEM IND LTD) 25 Juli 2000

## Beschreibung

Die vorliegende Erfindung betrifft ein Verfahren zur Herstellung von Polymerfasern, insbesondere von Nano- und Mesofasern, nach dem Elektrospinnverfahren sowie mit diesem Verfahren erhältliche Fasern.

Zur Herstellung von Nano- und Mesofasern sind dem Fachmann eine Vielzahl an Verfahren bekannt, von denen dem Elektrospinnverfahren ("Electrospinning") derzeit die größte Bedeutung zukommt. Bei diesem Verfahren, welches beispielsweise von D.H. Reneker, H.D. Chun in Nanotechn. 7 (1996), Seite 216 f. beschrieben ist, wird eine Polymerschmelze oder eine Polymerlösung an einer als Elektrode dienenden Kante einem hohen elektrischen Feld ausgesetzt. Dies kann beispielsweise dadurch erreicht werden, daß die Polymerschmelze oder Polymerlösung in einem elektrischen Feld unter geringem Druck durch eine mit einem Pol einer Spannungsquelle verbundene Kanüle extrudiert wird. Aufgrund der dadurch erfolgenden elektrostatischen Aufladung der Polymerschmelze oder Polymerlösung entsteht ein auf die Gegenelektrode gerichteter Materialstrom, der sich auf dem Wege zur Gegenelektrode verfestigt. In Abhängigkeit von den Elektrodengeometrien werden mit diesem Verfahren Vliese bzw. so genannte Nonwovens oder Ensembles geordneter Fasern erhalten.

In DE-A1-101 33 393 wird ein Verfahren zur Herstellung von Hohlfasern mit einem Innendurchmesser von 1 bis 100 nm offenbart, bei dem eine Lösung eines wasserunlöslichen Polymers - beispielsweise eine Poly-L-lactid-Lösung in Dichlormethan oder eine Polyamid-46-Lösung in Pyridin - elektroversponnen wird. Ein ähnliches Verfahren ist auch aus WO-A1-01/09414 und DE-A1-103 55 665 bekannt.

Aus DE-A1-196 00 162 ist ein Verfahren zur Herstellung von Rasenmäherdraht oder textilen Flächengebilden bekannt, bei dem Polyamid, Polyester oder Polypropylen als fadenbildendes Polymer, ein maleinsäureanhydrid-modifizierter Polyethylen/Polypropylen-Kautschuk sowie ein oder mehrere Alterungsstabilisatoren zusammengegeben, aufgeschmolzen und miteinander vermischt werden, bevor diese Schmelze schmelzversponnen wird.

Durch das Elektrospinnen von Polymerschmelzen lassen sich nur Fasern mit Durchmessern größer 1 µm herstellen. Für eine Vielzahl von Anwendungen, z.B. Filtrationsanwendungen, werden jedoch Nano- und/oder Mesofasern mit einem Durchmesser von weniger als 1 µm benötigt, die sich mit den bekannten Elektrospinnverfahren nur durch Einsatz von Polymerlösungen herstellen lassen.

Allerdings weisen diese Verfahren den Nachteil auf, daß die zu verspinnenden Polymere zunächst in Lösung gebracht werden müssen. Für wasserunlösliche Polymere, wie Polyamide, Polyolefine, Polyester, Polyurethane u.dgl., müssen daher nicht-wässrige Lösungsmittel - regelmäßig organische Lösungsmittel - eingesetzt werden, die in der Regel toxisch, brennbar, reizend, explosiv und/oder korrosiv sind.

Bei wasserlöslichen Polymeren, wie Polyvinylalkohol, Polyethylenoxid, Polyvinylpyrrolidon, Hydroxypropylzellulose u.dgl., kann zwar auf den Einsatz nicht-wässriger Lösungsmittel verzichtet werden. Jedoch sind die auf diese Weise erhaltenen Fasern naturgemäß in Wasser löslich, weshalb deren technische Anwendung stark eingeschränkt sind. Aus diesem Grund müssen diese Fasern nach dem Elektrospinnen durch mindestens einen weiteren Verarbeitungsschritt, beispielsweise durch chemische Vernetzung, gegenüber Wasser stabilisiert werden, was einen erheblichen technischen Aufwand darstellt und die Herstellungskosten der Fasern erhöht.

Ziel der Erfindung ist es, diese und weitere Nachteile des Standes der Technik zu vermeiden und ein Verfahren zur Herstellung von wasserstabilen Polymerfasern, insbesondere von Nano- und Mesofasern, nach dem Elektrospinnverfahren bereitzustellen, bei dem auf den Einsatz von nicht-wässrigen Lösungsmitteln zur Herstellung einer Polymerlösung sowie eine Nachbehandlung der elektroversponnenen Fasern zur Stabilisierung derselben gegenüber Wasser verzichtet werden kann.

Hauptmerkmale der Erfindung sind im kennzeichnenden Teil des Anspruchs 1 angegeben. Ausgestaltungen sind Gegenstand der Ansprüche 2 bis 11.

Erfindungsgemäß wird die Aufgabe durch die Bereitstellung eines Verfahrens gelöst, bei dem eine kolloidale Dispersion wenigstens eines im Wesentlichen wasserunlöslichen Polymers in einem wässrigen Medium elektroversponnen wird.

Überraschenderweise konnte im Rahmen der vorliegenden Erfindung herausgefunden werden, daß Fasern mit einer hohen Wasserbeständigkeit erhalten werden können, wenn anstelle der in den bekannten Elektrospinnverfahren eingesetzten Polymerschmelzen oder Polymerlösungen kolloidale Dispersionen wenigstens eines im Wesentlichen wasserunlöslichen Polymers in einem wässrigen Medium elektroversponnen werden. Insbesondere war es für den Fachmann überraschend, daß mit dem erfindungsgemäßen Verfahren Nano- und Mesofasern mit einem Durchmesser von weniger als 1 µm hergestellt werden können, was mit den bisher bekannten Verfahren nur durch Einsatz von Polymerlösungen erreicht werden konnte. Im Vorteil gegenüber den bekannten, auf dem Einsatz von Lösungen wasserunlöslicher Polymere basierenden Verfahren wird in dem erfindungsgemäßen Verfahren auf nichtwässrige toxische, brennbare, reizende, explosive und/oder korrosive Lösungsmittel verzichtet. Zudem kann in dem erfindungsgemäßen Verfahren im Unterschied zu den bekannten, auf dem Einsatz von wässrigen Lösungen wasserlöslicher Polymere basierenden Verfahren auf einen nachfolgenden Verfahrensschritt zur Wasserstabilisierung der Fasern verzichtet werden.

Erfindungsgemäß wird in dem Verfahren zur Herstellung der Polymerfasern eine kolloidale Dispersion wenigstens eines im Wesentlichen wasserunlöslichen Polymers in einem wässrigen Medium elektroversponnen, wobei unter im Wesentlichen wasserunlöslichen Polymeren im Sinne der vorliegenden Erfindung insbesondere Polymere mit einer Löslichkeit in Wasser von weniger als 0,1 Gew.-% verstanden werden.

Eine Dispersion im Sinne der vorliegenden Erfindung bezeichnet im Einklang mit dem Lehrbuchwissen eine Mischung von mindestens zwei nicht miteinander mischbaren Phasen, wobei eine der wenigstens zwei Phasen flüssig ist. In Abhängigkeit von dem Aggregatzustand der zweiten bzw. weiteren Phase werden Dispersionen in Aerosole, Emulsionen und Suspensionen unterteilt, wobei die zweite oder weitere Phase bei Aerosolen gasförmig, bei Emulsionen flüssig und bei Suspensionen fest ist. Die erfindungsgemäß einzusetzenden kolloidalen Polymerdispersionen werden in der Fachsprache auch als Latex bezeichnet.

Grundsätzlich können die erfindungsgemäßen kolloidalen Polymerdispersionen durch alle dem Fachmann zu diesem Zweck bekannten Verfahren hergestellt sein, wobei insbesondere durch Elektrospinnen von durch Emulsionspolymerisation hergestellten Latices besonders gute Ergebnisse erhalten werden.

Gemäß einer bevorzugten Ausführungsform der vorliegenden Erfindung wird in dem erfindungsgemäßen Verfahren eine kolloidale wässrige Dispersion eines aus der aus Poly-(p-xylylen), Polyvinylidenhalogeniden, Polyestern, Polyethern, Polyethylen, Polypropylen, Poly(Ethylen/Propylen) (EPDM), Polyolefinen, Polycarbonaten, Polyurethanen, natürlichen Polymeren, Polycarbonsäuren, Polysulfonsäuren, sulfatierten Polysacchariden, Polylactiden, Polyglycosiden, Polyamiden, Poly-α-methylstyrolen, Polymethacrylaten, Polyacrylnitrilen, Polyacrylamiden, Polyimiden, Polyphenylenen, Polysilanen, Polysiloxanen, Polybenzimidazolen, Polybenzthiazolen, Polyoxazolen, Polysulfiden, Polyesteramiden, Polyarylenvinylenen, Polyetherketonen, Polyurethanen, Polysulfonen, Ormocerenen, Polyacrylaten, Siliconen, vollaromatischen Copolyestern, Polyhydroxyethylmethacrylaten, Polymethylmethacrylaten, Polyethylenterephthalaten, Polybutylenterephthalat, Polymethacrylnitrilen, Polyvinylacetaten, Neopren, Buna N, Polybutadien, Polytetrafluorethylen, modifizierten und nicht modifizierten Cellulosen, Homo- und Copolymerisaten von α-Olefinen bestehenden Gruppe ausgewählten wasserunlöslichen Polymers eingesetzt. Alle vorgenannten Polymere können in den erfindungsgemäß einzusetzenden Latices jeweils einzeln oder in beliebiger Kombinationen miteinander eingesetzt werden und in jedem beliebigen Mischungsverhältnis.

Insbesondere mit Homo- oder Copolymerisaten basierend im Wesentlichen auf Acrylaten, Styrolen, Vinylacetaten, Vinylethern, Butadienen, Isoprenen, Methacrylaten, alpha-Methylstyrolen, Acrylamid, Vinylsulfonsäure, Vinylsulfonsäureestern, Vinylester, Vinylalkohol, Acrylnitril, Vinylsulfonenen und/oder Vinylhalogeniden, werden gute Ergebnisse erzielt.

Alle der vorgenannten Polymere können unvernetzt oder vernetzt eingesetzt werden, sofern deren Löslichkeit in Wasser weniger als 0,1 Gew.-% beträgt.

Besonders gute Ergebnisse werden mit kolloidalen Polymersuspensionen erhalten, wobei der durchschnittliche Teilchendurchmesser des wenigstens einen im Wesentlichen wasserunlöslichen Polymers vorzugsweise zwischen 1 nm und 1 µm beträgt. Im Allgemeinen liegt der durchschnittliche Teilchendurchmesser der Latexpartikel zwischen 0,03 µm und 2,5 µm, bevorzugt zwischen 0,05 µm und 1,2 µm (bestimmt nach W. Scholtan und H. Lange in Kolloid-Z. und Polymere 250 (1972), S. 782-796 mittels Ultrazentrifuge).

Sofern die erfindungsgemäß einzusetzende Latex auf zwei oder mehreren Monomeren basiert, können die Latexpartikel auf jede dem Fachmann bekannte Art und Weise angeordnet sein. Lediglich beispielsweise seien Teilchen mit Gradienten-Struktur, Kern-Mantel-Struktur, Salami-Struktur, Multikern-Struktur, Mehrschicht-Struktur und Himbeermorphologie genannt, wobei jedoch diesem Aufbau eine nur untergeordnete Bedeutung zukommt.

Unter dem Begriff Latex ist auch die Mischung zweier oder mehrerer Latices zu verstehen. Die Herstellung der Mischung kann durch alle dafür bekannten Verfahren erfolgen, z.B. durch Vermischen zweier Latices zu jedem Zeitpunkt vor dem Verspinnen.

Gemäß einer weiteren bevorzugten Ausführungsform der vorliegenden Erfindung enthält die kolloidale Dispersion neben dem wenigstens einen wasserunlöslichen Polymer zusätzlich wenigstens ein wasserlösliches Polymer, wobei unter wasserlöslichem Polymer im Sinne der vorliegenden Erfindung ein Polymer mit einer Löslichkeit in Wasser von mindestens 0,1 Gew.-% verstanden wird.

Bei dem wasserlöslichen Polymer kann es sich um ein Homopolymer, Copolymer, Blockpolymer, Pfropfcopolymer, Sternpolymer, hochverzweigtes Polymer, Dendrimer oder eine Mischung aus zwei oder mehreren der vorgenannten Polymertypen handeln. Nach den Erkenntnissen der vorliegenden Erfindung beschleunigt der Zusatz wenigstens eines wasserlöslichen Polymers nicht nur die Faserbildung. Es wird vielmehr auch die Qualität der erhaltenen Fasern deutlich verbessert. Werden die so hergestellten Fasern mit Wasser kontaktiert, verschwindet das wasserlösliche Polymer, ohne zu einer Desintegration der Fasern zu führen.

Grundsätzlich können der kolloidalen Dispersion wenigstens eines im Wesentlichen wasserunlöslichen Polymers in einem wässrigen Medium alle dem Fachmann bekannten wasserlöslichen Polymere zugesetzt sein, wobei insbesondere mit aus der aus Polyethylenoxiden, Hydroxymethyxlcellulosen, Hydroxyethylcellulosen, Hydroxypropylcellulosen, Carboxymethylcellulosen, Maleinsäuren, Alginaten, Collagenen, Polyvinylalkohol, Poly-N-vinylpyrrolidon, Kombinationen hiervon, Copolymeren hiervon, Pfropfcopolymeren hiervon, Sternpolymeren hiervon, hochverzweigten Polymeren hiervon und Dendrimeren hiervon bestehenden Gruppe ausgewählten wasserlöslichen Polymeren besonders gute Ergebnisse erzielt werden.

Die Herstellung der kolloidalen Dispersionen wenigstens eines im Wesentlichen wasserunlöslichen Polymers in einem wässrigen Medium des weiteren enthaltend wenigstens ein wasserlösliches Polymer gemäß der weiteren Ausführungsform der Erfindung kann auf jede dem Fachmann bekannte Weise erfolgen, beispielsweise durch Emulsionspolymerisation.

Unabhängig von der Ausführungsform beträgt der Feststoffgehalt der erfindungsgemäß einzusetzenden kolloidalen Dispersion - bezogen auf die Dispersion - vorzugsweise 5 bis 80 Gew.-%, besonders bevorzugt 10 bis 70 Gew.-% und ganz besonders bevorzugt 10 bis 65 Gew.-%.

In der weiteren Ausführungsform der vorliegenden Erfindung enthält die in dem erfindungsgemäßen Verfahren einzusetzende kolloidale Dispersion umfassend wenigstens ein wasserunlösliches und wenigstens ein wasserlösliches Polymer in einem wässrigen Medium, bezogen auf den Feststoffgehalt der Dispersion, 0 bis 80 Gew.-%, besonders bevorzugt 10 bis 80 Gew.-% und ganz besonders bevorzugt 17 bis 70 Gew.-% wenigstens eines wasserlöslichen Polymers.

Die erfindungsgemäß einzusetzende kolloidale Dispersion kann auf alle dem Fachmann bekannte Arten elektroversponnen werden, beispielsweise durch Extrusion des Latex unter geringem Druck durch eine mit einem Pol einer Spannungsquelle verbundene Kanüle auf eine in Abstand zu dem Kanülenausgang angeordnete Gegenelektrode. Vorzugsweise wird der Abstand zwischen der Kanüle und der als Kollektor fungierenden Gegenelektrode sowie die Spannung zwischen den Elektroden derart eingestellt, daß sich zwischen den Elektroden ein elektrisches Feld von vorzugsweise 0,5 bis 2 kV/cm, besonders bevorzugt 0,75 bis 1,5 kV/cm und ganz besonders bevorzugt 0,8 bis 1 kV/cm ausbildet.

Gute Ergebnisse werden insbesondere erhalten, wenn der Innendurchmesser der Kanüle 50 bis 500 um beträgt.

Je nach Verwendungszweck der hergestellten Fasern kann es zweckmäßig sein, diese nachträglich chemisch miteinander zu verknüpfen oder z.B. durch einen chemischen Vermittler miteinander zu vernetzen. Dadurch läßt sich beispielsweise die Stabilität einer von den Fasern gebildeten Faserlage weiter verbessern, insbesondere in Bezug auf die Wasser- und Temperaturbeständigkeit.

Mit dem erfindungsgemäßen Verfahren sind Fasern, insbesondere Nano- und Mesofasem, erhältlich.

Vorzugsweise beträgt der Durchmesser der erfindungsgemäß hersgestellten Fasern 10 nm bis 50 um, besonders bevorzugt 50 nm bis 2 um und ganz besonders bevorzugt 100 nm bis 1 um. Die Länge der Fasern hängt vom Verwendungszweck ab und beträgt in der Regel 50 um bis hin zu mehreren Kilometern.

Mit dem erfindungsgemäßen Verfahren lassen sich nicht nur kompakte Fasern, sondern insbesondere auch Hohlfasern, insbesondere solche mit einem Innendurchmesser von weniger als 1 um und besonders bevorzugt von weniger als 100 nm herstellen. Zur Herstellung solcher Hohlfasern kann die mit dem vorgenannten erfindungsgemäßen Verfahren hergestellte Faser beispielsweise mit einem aus der aus anorganischen Verbindungen, Polymeren und Metallen bestehenden Gruppe ausgewählten Substanz beschichtet und anschließend das innen befindliche wasserunlösliche Polymer, beispielsweise thermisch, chemisch, biologisch, strahleninduziert, photochemisch, durch Plasma, Ultraschall oder Extraktion mit einem Lösungsmittel, abgebaut werden. Die zur Beschichtung geeigneten Materialien und die zur Auflösung des faserinneren Materials geeigneten Methoden sind beispielsweise in DE-A1-101 33 393 beschrieben.

Weitere Ziele, Merkmale, Vorteile und Anwendungsmöglichkeiten der Erfindung ergeben sich aus der nachfolgenden Beschreibung von Ausführungsbeispielen und den Zeichnungen. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: eine schematische Darstellung einer zur Durchführung des erfindungsgemäßen Elektrospinnverfahrens geeigneten Vorrichtung,
- Fig. 2: Strukturen unterschiedlicher aus zwei verschiedenen Polymeren zusammengesetzter, in den erfindungsgemäßen Latices einsetzbaren Teilchen,
- Fig. 3: eine rasterelektronenmikroskopische Aufnahme der in Beispiel 1 erhaltenen Fasern,
- Fig. 4: eine rasterelektronenmikroskopische Aufnahme der in Beispiel 2 erhaltenen Fasern,
- Fig. 5: rasterelektronenmikroskopische Aufnahmen der in Beispiel 3 erhaltenen Fasern und
- Fig. 6: rasterelektronenmikroskopische Aufnahmen der in Beispiel 4 erhaltenen Fasern vor (A) und nach Wasserbehandlung (B, C).

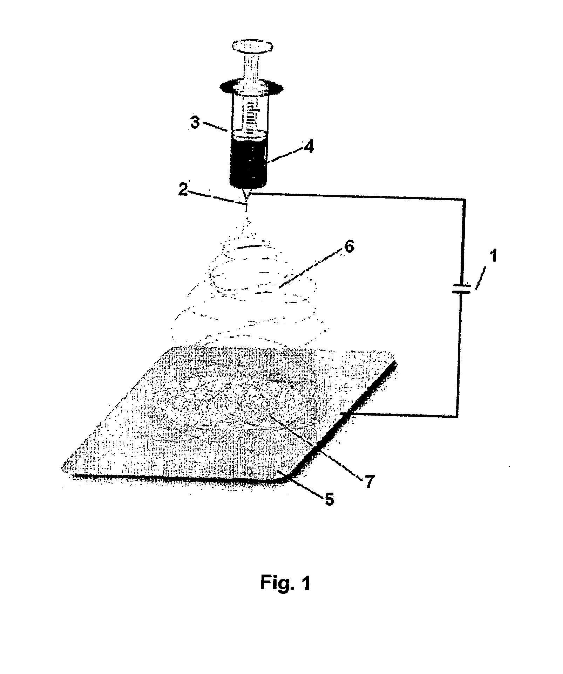

Die in der Fig. 1 dargestellte, zur Durchführung des erfindungsgemäßen Verfahrens geeignete Vorrichtung zum Elektrospinnen umfaßt eine an deren Spitze mit einer mit einem Pol einer Spannungsquelle 1 verbundenen Kapillardüse 2 versehene Spritze 3 zur Aufnahme der erfindungsgemäßen kolloidalen Dispersion 4. Gegenüber dem Ausgang der Kapillardüse 2 ist in einem Abstand von etwa 20 cm eine mit dem anderen Pol der Spannungsquelle 1 verbundene quadratische Gegenelektrode 5 angeordnet, die als Kollektor für die gebildeten Fasern fungiert.

Während des Betriebs der Vorrichtung wird an den Elektroden 2, 5 eine Spannung zwischen 18 kV und 35 kV eingestellt und die kolloidale Dispersion 4 unter einem geringen Druck durch die Kapillardüse 2 der Spritze 3 ausgetragen. Aufgrund der durch das starke elektrische Feld von 0,9 bis 2 kV/cm erfolgenden elektrostatischen Aufladung der im Wesentlichen wasserunlöslichen Polymere in der kolloidalen Dispersion entsteht ein auf die Gegenelektrode 5 gerichteter Materialstrom, der sich auf dem Wege zur Gegenelektrode 5 unter Faserbildung 6 verfestigt, infolge dessen sich auf der Gegenelektrode 5 Fasern 7 mit Durchmessern im Mikro- und Nanometerbereich abscheiden.

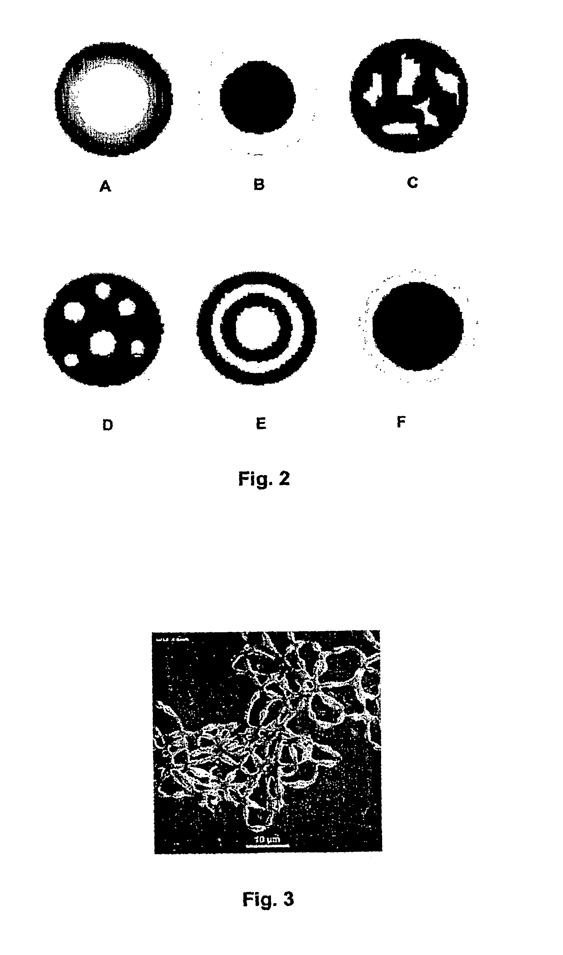

Mit der vorgenannten Vorrichtung wird erfindungsgemäß eine kolloidale Dispersion wenigstens eines im Wesentlichen wasserunlöslichen Polymers in einem wässrigen Medium elektroversponnen. Sofern die in der Dispersion eingesetzten Polymerpartikel aus zwei oder mehr wasserunlöslichen Polymeren bestehen, können diese innerhalb der Teilchen auf jedem dem Fachmann bekannte Weise angeordnet sein, beispielsweise in der in der Fig. 2 dargestellten Gradienten-Struktur (Fig. 2A), Kern-Mantel-Struktur (Fig. 2B), Salami-Struktur (Fig. 2C), Multikern-Struktur (Fig. 2D), Mehrschicht-Struktur (Fig. 2E) oder Himbeermorphologie (Fig. 2F).

Die Bestimmung des Feststoffgehaltes innerhalb der Dispersion erfolgt gravimetrisch mittels eines Mettler Toledo HR73 Halogen Moisture Analyser, indem ca. 1 ml der Probe innerhalb von 2 Minuten auf 200 °C aufgeheizt wird und die Probe bis zur Gewichtskonstanz getrocknet und anschließend gewogen wird.

Die mittlere Teilchengröße ist der Gewichtsmittelwert d₅₀, bestimmt mittels einer analytischen Ultrazentrifuge (nach W. Scholtan und H. Lange in Kolloid-Z. und Polymere 250 (1972), S. 782-796).

Die Größe, d.h. der Durchmesser und die Länge der Fasern, wird durch Auswertung elektronenmikroskopischer Aufnahmen bestimmt.

Die in den nachfolgenden Beispielen verwendete Latex besteht aus einem teilvernetzten Poly(n-butylacrylat) mit einem Feststoffgehalt von etwa 40 Gew.-% bezogen auf das Gesamtgewicht der reinen Dispersion. Als Emulgator wird ein C15 Alkylsulfonat eingesetzt. Die mittlere Teilchengröße beträgt ca. 90 nm.

Als wasserlösliches Polymer wird Polyethylenoxid (PEO) verwendet. Dessen Molekulargewicht beträgt 900.000 g/mol.

### Beispiel 1

### (Elektroversponnene Fasern mit Polycrylat und 11 Gew.-% PEO)

Eine erfindungsgemäße kolloidale Dispersion wenigstens eines im Wesentlichen wasserunlöslichen Polymers in einem wässrigen Medium des weiteren enthaltend ein wasserlösliches Polymer gemäß der weiteren Ausführungsform der vorliegenden Erfindung wurde hergestellt durch Lösen von 0,41 g Poly(n-butylacrylat) in 1 ml Wasser.

Der Feststoffanteil der Dispersion, d.h. des Poly(n-butylacrylat)-Latex, beträgt mithin etwa 40 Gew.-%. Dieser Mischung wurde 0,045 g Polyethylenoxid (PEO) zugegeben.

Die so hergestellte wässrige Dispersion wurde in der in der Fig. 1 dargestellten Vorrichtung elektroversponnen. Dabei wurde die Dispersion bei einer Temperatur von 20 °C unter leichtem Druck durch eine Spritze 3 mit einer an deren Spitze vorgesehenen Kapillardüse 2 mit einem Innendurchmesser von 0,3 mm mit einem Probenvorschub von 0,525 ml/h gefördert, wobei der Abstand der Elektroden 2, 5 etwa 20 cm betrug und zwischen den Elektroden 2,5 eine Spannung von 18 kV angelegt wurde.

Eine rasterelektronenmikroskopische Aufnahme der auf diese Weise erhaltenen Fasern ist in Fig. 3 dargestellt.

### Beispiel 2

### (Elektroversponnene Fasern mit Polyacrylat und 20 Gew.-% PEO)

In diesem Beispiel wurde dem Poly(n-butylacrylat)-Latex (0,41 g Poly(n-butylacrylat) gelöst in 1 ml Wasser) 0.084 g Polyethylenoxid zugesetzt.. Diese kolloidale wässrige Dispersion wurde unter den in Beispiel 1 beschriebenen Bedingungen elektroversponnen.

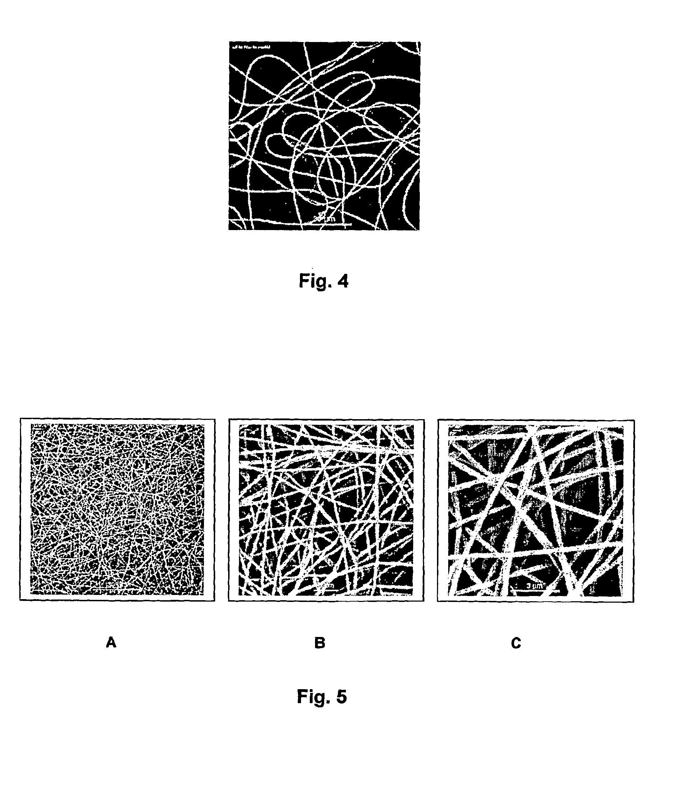

Eine rasterelektronenmikroskopische Aufnahme der auf diese Weise erhaltenen Fasern ist in Fig. 4 dargestellt.

### Beispiel 3

### (Elektroversponnene Fasern mit Polyacrylat und 70 Gew.-% PEO)

Eine weitere erfindungsgemäße kolloidale Dispersion mit wenigstens einem im Wesentlichen wasserunlöslichen Polymer und einem im Wesentlichen wasserlöslichen Polymer wurde hergestellt durch Lösen von 0,34 g Poly(n-butylacrylat) in 1 ml Wasser. Der Feststoffanteil des Poly(n-butylacrylat)-Latex beträgt mithin etwa 35 Gew.-%. Dieser Mischung wurde 0,238 g Polyethylenoxid (PEO) zugegeben.

Auch diese kolloidale wässrige Dispersion wurde unter den in Beispiel 1 genannten Bedingungen elektroversponnen. Rasterelektronenmikroskopische Aufnahmen der auf diese Weise erhaltenen Fasern sind in Fig. 5 dargestellt.

### Beispiel 4

### (Elektroversponnene Fasern mit Polyacrylat und 50 Gew.-% PEO)

Gleichermaßen wie in Beispiel 1 wurde eine kolloidale Dispersion von Poly(n-butylacrylat)-Latex mit einem Feststoffanteil von 40 Gew.-% in Wasser mit, bezogen auf den Feststoffgehalt, 50 Gew.-% Polyethylenoxid als wasserlöslichem Polymer hergestellt und elektroversponnen. Anschließend wurden die so erhaltenen Fasern bei 20 °C in Wasser inkubiert.

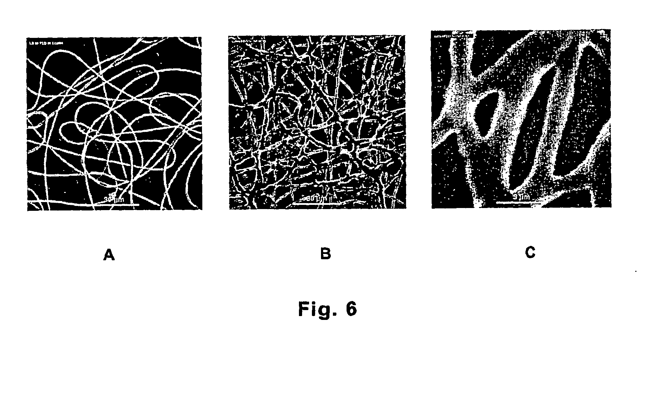

Rasterelektronenmikroskopische Aufnahmen der erhaltenen Fasern vor der Wasserbehandlung, nach 1 Min. und 30 Min. Wasserbehandlung sind in Fig. 6 dargestellt. Wie den Aufnahmen zu entnehmen ist, lösen sich die elektroversponnenen Fasern bei Inkubation in Wasser nicht auf.

Die Erfindung ist nicht auf eine der vorbeschriebenen Ausführungsformen beschränkte, sondern in vielfältiger Weise abwandelbar. Man erkennt aber, daß die vorliegende Erfindung ein Verfahren zur Herstellung von Polymerfasern betrifft, insbesondere von Nano- und Mesofasern, nach dem Elektrospinnverfahren, bei dem eine kolloidale Dispersion wenigstens eines im Wesentlichen wasserunlöslichen Polymers ggf. enthaltend des weiteren wenigstens ein wasserlösliches Polymer in einem wässrigen Medium elektroversponnen wird.

### Bezugszeichenliste

- 1: Spannungsquelle
- 2: Kapillardüse
- 3: Spritze
- 4: kolloidale Dispersion
- 5: Gegenelektrode
- 6: Faserbildung
- 7: Fasermatte

## Patentansprüche

1. Verfahren zur Herstellung von Polymerfasern, insbesondere von Nano- und Mesofasern, nach dem Elektrospinnverfahren, **dadurch gekennzeichnet daß** eine kolloidale Dispersion wenigstens eines im Wesentlichen wasserunlöslichen Polymers in einem wässrigen Medium elektroversponnen wird.

2. Verfahren nach Anspruch 1, **dadurch gekennzeichnet, daß** das wenigstens eine im Wesentlichen wasserunlösliche Polymer eine Löslichkeit in Wasser von weniger als 0,1 Gew.-% aufweist.

3. Verfahren nach Anspruch 1 oder 2, **dadurch gekennzeichnet, daß** das wenigstens eine im Wesentlichen wasserunlösliche Polymer aus der aus Poly-(p-xylylen), Polyvinylidenhalogeniden, Polyestern, Polyethern, Polyethylen, Polypropylen, Poly(Ethylen/Propylen) (EPDM), Polyolefinen, Polycarbonaten, Polyurethanen, natürlichen Polymeren, Polycarbonsäuren, Polysulfonsäuren, sulfatierten Polysacchariden, Polylactiden, Polyglycosiden, Polyamiden, Poly(alkyl)styrolen, Polyacrylnitrilen, Polyacrylamiden, Polyimiden, Polyphenylenen, Polysilanen, Polysiloxanen, Polybenzimidazolen, Polybenzthiazolen, Polyoxazolen, Polysulfiden, Polyesteramiden, Polyarylenvinylenen, Polyetherketonen, Polyurethanen, Polysulfonen, Ormocerenen, Siliconen, voilaromatischen Copolyestern, Poly(alkyl)acrylaten, Poly(alkyl)methacrylaten, Polyhydroxyethylmethacrylaten, Polyethylenterephthalaten, Polybutylenterephthalat, Polymethacrylnitrilen, Polyvinylacetaten, Polyisopren, Neopren, , Buna N, Polybutadien, Polytetrafluorethylen, modifizierten und nicht modifizierten Cellulosen, Homo- und Copolymerisaten von alpha-Olefinen sowie Kombinationen hiervon bestehenden Gruppe ausgewählt ist.

4. Verfahren nach Anspruch 3, **dadurch gekennzeichnet, daß** das wenigstens eine im Wesentlichen wasserunlösliche Polymer ein Homo- oder Copolymerisat basierend im Wesentlichen auf Acrylaten, Styrolen, Vinylacetaten, Vinylethern, Butadienen, Isoprenen, Methacrylaten, alpha-Methylstyrolen, Acrylamid, Vinylsulfonsäure, Vinylsulfonsäureestern, Vinylester, Vnylalkohol, Acrylnitril, Vinylsulfonenen und/oder Vinylhalogeniden ist.

5. Verfahren nach einem der vorhergehenden Ansprüche, **dadurch gekennzeichnet, daß** der durchschnittliche Teilchendurchmesser des wenigstens einen im Wesentlichen wasserunlöslichen Polymers zwischen 1 nm und 1 um beträgt

6. Verfahren nach einem der vorhergehenden Ansprüche, **dadurch gekennzeichnet, daß** die kolloidale Dispersion ein wasserlösliches Polymer mit einer Löslichkeit in Wasser von mindestens 0,1 Gew.-% enthält.

7. Verfahren nach Anspruch 6, **dadurch gekennzeichnet, daß** das wasserlösliche Polymer aus der aus Homopolymeren, Copolymeren, Pfropfcopolymeren, Stempolymeren, hochverzweigten Polymeren und Dendrimeren bestehenden Gruppe ausgewählt ist.

8. Verfahren nach Anspruch 6 oder 7, **dadurch gekennzeichnet, daß** das wasserlösliche Polymer aus der aus Polyethylenoxiden, Hydroxymethyxlcellulosen, Hydroxyethylcellulosen, Hydroxypropylcellulosen, Carboxymethylcellulosen, Maleinsäuren, Alginaten, Collagenen, Polyvinylalkohol, Poly-N-vinylpyrrolidon, Kombinationen hiervon, Copolymeren hiervon, Pfropfcopolymeren hiervon, Sternpolymeren hiervon, hochverzweigten Polymeren hiervon und Dendrimeren hiervon bestehenden Gruppe ausgewählt ist.

9. Verfahren nach einem der vorhergehenden Ansprüche, **dadurch gekennzeichnet, daß** der Feststoffgehalt der kolloidalen Dispersion, bezogen auf die Dispersion, 5 bis 80 Gew.-%, bevorzugt 10 bis 70 Gew.-% und besonders bevorzugt 10 bis 65 Gew.-% beträgt.

10. Verfahren nach einem der Ansprüche 6 bis 9, **dadurch gekennzeichnet, daß** die kolloidale Dispersion, bezogen auf den Feststoffgehalt der Dispersion, 0 bis 80 Gew.-% bevorzugt 10 bis 80 Gew.-% und besonders bevorzugt 17 bis 70 Gew.-% eines wasserlöslichen Polymers enthält.

11. Verfahren nach einem der vorhergehenden Ansprüche, **dadurch gekennzeichnet, daß** die nach dem Elektrospinnverfahren gewonnenen Fasern chemisch miteinander verknüpft oder vernetzt werden.

## Claims

1. A process for producing polymer fibers, in particular nano- and mesofibers, according to the electrospinning process, which comprises a electrospinning colloidal dispersion of at least one essentially water-insoluble polymer in an aqueous medium.

2. The process according to claim 1, wherein the at least one essentially water-insoluble polymer has a solubility in water of less than 0.1% by weight.

3. The process according to claim 1 or 2, wherein the at least one essentially water-insoluble polymer is selected from the group consisting of poly(p-xylylene), polyvinylidene halides, polyesters, polyethers, polyethylene, polypropylene, poly(ethylene/propylene) (EPDM), polyolefins, polycarbonates, polyurethanes, natural polymers, polycarboxylic acids, polysulfonic acids, sulfated polysaccharides, polylactides, polyglycosides, polyamides, poly(alkyl)styrenes, polyacrylonitriles, polyacrylamides, polyimides, polyphenylenes, polysilanes, polysiloxanes, polybenzimidazoles, polybenzothiazoles, polyoxazoles, polysulfides, polyesteramides, polyarylenevinylenes, polyether ketones, polyurethanes, polysulfones, ormocers, silicones, fully aromatic copolyesters, poly(alkyl) acrylates, poly(alkyl) methacrylates, polyhydroxyethyl methacrylates, polyethylene terephthalates, polybutylene terephthalate, polymethacrylonitriles, polyvinyl acetates, polyisoprene, neoprene, Buna N, polybutadiene, polytetrafluoroethylene, modified and unmodified celluloses, homo- and copolymers of alpha-olefins, and combinations thereof.

4. The process according to claim 3, wherein the at least one essentially water-insoluble polymer is a homo- or copolymer based essentially on acrylates, styrenes, vinyl acetates, vinyl ethers, butadienes, isoprenes, methacrylates, alpha-methylstyrenes, acrylamide, vinylsulfonic acid, vinylsulfonic esters, vinyl esters, vinyl alcohol, acrylonitrile, vinyl sulfones and/or vinyl halides.

5. The process according to any of the preceding claims, wherein the average particle diameter of the at least one essentially water-insoluble polymer is between 1 nm and 1 µm.

6. The process according to any of the preceding claims, wherein the colloidal dispersion comprises a water-soluble polymer having a solubility in water of at least 0.1% by weight.

7. The process according to claim 6, wherein the water-soluble polymer is selected from the group consisting of homopolymers, copolymers, graft copolymers, star polymers, highly branched polymers and dendrimers.

8. The process according to claim 6 or 7, wherein the water-soluble polymer is selected from the group consisting of polyethylene oxides, hydroxymethylcelluloses, hydroxyethylcelluloses, hydroxypropylcelluloses, carboxymethylcelluloses, maleic acids, alginates, collagens, polyvinyl alcohol, poly-N-vinylpyrrolidone, combinations thereof, copolymers thereof, graft copolymers thereof, star polymers thereof, highly branched polymers thereof, and dendrimers thereof.

9. The process according to any of the preceding claims, wherein the solids content of the colloidal dispersion, based on the dispersion, is from 5 to 80% by weight, preferably from 10 to 70% by weight and more preferably from 10 to 65% by weight.

10. The process according to any of claims 6 to 9, wherein the colloidal dispersion, based on the solids content of the dispersion, comprises from 0 to 80% by weight, preferably from 10 to 80% by weight and more preferably from 17 to 70% by weight of a water-soluble polymer.

11. The process according to any of the preceding claims, wherein the fibers obtained by the electrospinning process are bonded chemically to one another or crosslinked.

## Revendications

1. Procédé pour la préparation de fibres polymères, en particulier de nanofibres et de mésofibres, selon le procédé d'électrofilage, **caractérisé en ce qu'**une dispersion colloïdale d'au moins un polymère sensiblement insoluble dans l'eau est électrofilée dans un milieu aqueux.

2. Procédé selon la revendication 1, **caractérisé en ce que** ledit au moins un polymère sensiblement insoluble dans l'eau présente une solubilité dans l'eau inférieure à 0,1% en poids.

3. Procédé selon la revendication 1 ou 2, **caractérisé en ce que** ledit au moins un polymère sensiblement insoluble dans l'eau est choisi dans le groupe constitué par les poly-(p-xylylènes), les poly(halogénures de vinylidène), les polyesters, les polyéthers, le polyéthylène, le polypropylène, le poly(éthylène/propylène) (EPDM), les polyoléfines, les polycarbonates, les polyuréthanes, les polymères naturels, les poly(acides carboxyliques), les poly(acides sulfoniques), les polysaccharides sulfatés, les polylactides, les polyglycosides, les polyamides, les poly(alkyl)styrènes, les polyacrylonitriles, les polyacrylamides, les polyimides, les polyphénylènes, les polysilanes, les polysiloxanes, les polybenzimidazoles, les polybenzothiazoles, les polyoxazoles, les polysulfures, les polyesteramides, les polyarylène-vinyles, les polyéthercétones, les polyuréthanes, les polysulfones, les ormocers, les silicones, les copolyesters complètement aromatiques, les polyacrylates (d'alkyle), les polyméthacrylates (d'alkyle), les poly(méthacrylates d'hydroxyéthyle), les poly(téréphtalates d'éthylène), le poly(téréphtalate de butylène), les polyméthacrylonitriles, les poly(acétates de vinyle), le polyisoprène, le néoprène, le Buna N, le polybutadiène, le polytétrafluoroéthylène, les celluloses modifiées et non modifiées, les homopolymères et les copolymères d'alpha-oléfines ainsi que les combinaisons de ceux-ci.

4. Procédé selon la revendication 3, **caractérisé en ce que** ledit au moins un polymère sensiblement insoluble dans l'eau est un homopolymère ou un copolymère à base, essentiellement, d'acrylates, de styrènes, d'acétates de vinyle, de vinyléthers, de butadiènes, d'isoprènes, de méthacrylates, d'alpha-méthylstyrènes, d'acrylamide, d'acide vinylsulfonique, d'esters d'acide vinylsulfonique, d'esters de vinyle, d'alcool vinylique, d'acrylonitrile, de vinylsulfones et/ou d'halogénures de vinyle.

5. Procédé selon l'une quelconque des revendications précédentes, **caractérisé en ce que** le diamètre moyen des particules dudit au moins un polymère sensiblement insoluble dans l'eau est situé entre 1 nm et 1 µm.

6. Procédé selon l'une quelconque des revendications précédentes, **caractérisé en ce que** la dispersion colloïdale contient un polymère soluble dans l'eau présentant une solubilité dans l'eau d'au moins 0,1% en poids.

7. Procédé selon la revendication 6, **caractérisé en ce que** le polymère soluble dans l'eau est choisi dans le groupe constitué par les homopolymères, les copolymères, les copolymères greffés, les polymères en étoile, les polymères hautement ramifiés et les dendrimères.

8. Procédé selon la revendication 6 ou 7, **caractérisé en ce que** le polymère soluble dans l'eau est choisi dans le groupe constitué par les poly(oxydes d'éthylène), les hydroxyméthylcelluloses, les hydroxyéthylcelluloses, les hydroxypropylcelluloses, les carboxyméthylcelluloses, les acides maléiques, les alginates, les collagènes, le poly(alcool vinylique), la poly-N-vinylpyrrolidone, leurs combinaisons, leurs copolymères, leurs copolymères greffés, leurs polymères en étoile, leurs polymères hautement ramifiés et leurs dendrimères.

9. Procédé selon l'une quelconque des revendications précédentes, **caractérisé en ce que** la teneur en solides de la dispersion colloïdale, par rapport à la dispersion, est de 5 à 80% en poids, de préférence de 10 à 70% en poids et de manière particulièrement préférée de 10 à 65% en poids.

10. Procédé selon l'une quelconque des revendications 6 à 9, **caractérisé en ce que** la dispersion colloïdale contient, par rapport à la teneur en solides de la dispersion, 0 à 80% en poids, de préférence 10 à 80% en poids et de manière particulièrement préférée 17 à 70% en poids d'un polymère soluble dans l'eau.

11. Procédé selon l'une quelconque des revendications précédentes, **caractérisé en ce que** les fibres obtenues selon le procédé d'électrofilage sont liées ou réticulées chimiquement les unes avec les autres.
